# EUROPÄISCHE PATENTANMELDUNG

(11) **EP 3 208 460 A1**
(43) Veröffentlichungstag der Anmeldung: **23.08.2017**
(21) Anmeldenummer: 16156404.2
(22) Anmeldetag: 18.02.2016
(51) Int. Cl.: F03D 1/06, F03D 3/00

(54) **MASCHINE MIT FLETTNER ROTOR UND ARBEITSVERFAHREN FÜR DIE MASCHINE**

(71) Anmelder: Penn, Robert, 82223 Eichenau (DE)
(72) Erfinder: Penn, Robert, 82223 Eichenau (DE)
(74) Vertreter: Jöstingmeier, Martin

(57) **Zusammenfassung**

Eine Vorrichtung, mit wenigstens einem Rotor, der einer Symmetrieachse hat zu der der Rotor rotationssymmetrisch ist, der um seine Symmetrieachse motorisch drehangetrieben ist, und der um eine quer zur Symmetrieachse angeordnete Rotationsachse drehbar gelagert ist, so dass der Rotor bei einer Anströmung mit einem Fluid durch eine Quer zur Fluidströmung wirkende Kraft in eine Drehbewegung um die Rotationsachse drehangetrieben wird ermöglicht die Erzeugung einer Drehbewegung wenn der Rotor in dem Fluid relativ zu dem Fluid in Längsrichtung der Rotationsachse translatorisch angetrieben ist.

## Beschreibung

### Technisches Gebiet

Die Erfindung betrifft eine Vorrichtung zur Erzeugung einer Drehbewegung mittels eines Flettner-Rotors.

### Stand der Technik

Als Flettner Rotor wird ein auf Anton Flettner zurückgehender Rotor verstanden. Der Flettner Rotor ist bezüglich seiner Rotationsachse rotationssymmetrisch und wird einer Fluidströmung ausgesetzt, deren Strömungsrichtung orthogonal zu der Rotationsachse ist, bzw. zumindest eine nicht verschwindende orthogonale Komponente hat. Flettner machte dadurch den nach dem Physiker Heinrich Gustaf Magnus benannten ,Magnus Effekt' nutzbar. Als Magnus Effekt wird eine Querkraft bezeichnet, die auf den in der Strömung rotierenden Flettner Rotor wirkt. Die Querkraft wirkt im Wesentlichen orthogonal zu der Strömung und der Rotationachse. Die Flettner Rotoren wurden in der Schifffahrt als Segel verwendet, zur Auftriebserzeugung bei Flugzeugen als auch in Windkraftanlage (Anton Flettner: Mein Weg zum Rotor, Köhler & Amelang, Leipzig 1926).

### Darstellung der Erfindung

Der Erfindung liegt die Aufgabe zugrunde einen Rotationsantrieb mit einem Flettner-Rotor und ein entsprechendes Arbeitsverfahren bereitzustellen.

Die Aufgabe wird durch eine Vorrichtung nach dem unabhängigen Anspruch, bzw. durch ein entsprechendes Verfahren gelöst.

Die Vorrichtung hat wenigstens einen Rotor mit einer Symmetrieachse. Der Rotor ist zu seiner Symmetrieachse rotationssymmetrisch, vorzugsweise kontinuierlich rotationssymmetrisch. Kontinuierlich rotationssymmetrisch meint hier, dass der Rotor bei einer Rotation um einen beliebigen Winkel um die Symmetrieachse auf sich selbst abgebildet wird. Der Rotor ist um seine Symmetrieachse drehangetrieben. Dazu kann er z.B. auf einem Stab um seine Symmetrieachse mittels wenigstens eines ersten Lagers drehbar gelagert und motorisch, vorzugsweise elektromotorisch angetrieben sein.

Der Rotor ist zudem um eine zweite Achse, die als Rotationsachse bezeichnet wird, drehbar gelagert, wobei der Rotor vorzugsweise beabstandet von der Rotationsachse angeordnet ist. In dem Beispiel des an dem Stabes drehbar gelagerten Rotors, wäre der Stab um die zweite Achse drehbar gelagert. Die Rotationsachse ist zumindest in etwa quer zur Symmetrieachse im Raum orientiert, so dass bei einer Bewegung des Rotors entlang der Rotationsachse in einem Fluid eine auf den Rotor wirkende Querkraftkomponente diesen in eine Rotation um die Rotationsachse versetzt. Nur der guten Ordnung halber sei nochmals darauf hingewiesen, dass der Begriff Rotationsachse hier die zweite Achse bezeichnet und nicht die Symmetrieachse des Rotors, um welche der Rotor drehangetrieben ist. Die Symmetrieachse könnte dementsprechend auch als erste Achse bezeichnet werden.

Damit der Rotor sich entsprechend um die zweite Achse (=Rotationsachse) dreht, wird er durch einen weiteren Antrieb in einem Fluid entlang der Rotationsachse verschoben. Streng genommen genügt es, wenn der Bewegungsvektor der Verschiebung eine nicht verschwindende Komponente in Längsrichtung der Rotationsachse aufweist. Nur der sprachlichen Einfachheit halber soll dies gemeint sein, wenn von einer Translation des Rotors entlang der Rotationsachse gesprochen wird. Der weitere Antrieb kann z.B. wieder ein Elektroantrieb sein.

Vorzugsweise ist der Rotor zwangsgeführt, so dass die die zweite Achse (=die Rotationsachse) während der Translation zumindest zeitweise rotiert. Das kann z.B. durch eine Bahnführung des Lagers, welches die Rotation um die zweite Achse ermöglicht, erreicht werden (nachfolgend kurz,zweites Lager'). Vorzugsweise beschreibt die Bahnführung eine geschlossene Kurve, d.h. zweite Lager wird auf einer geschlossenen und vorzugsweise stetig gekrümmten Kurve geführt. Im einfachsten Fall kann das zweite Lager, z.B. in einem Drehgestellt sitzen, so dass die Kurve eine Kreisbahn ist. Dann rotiert das zweite Lager auf einer Kreisbahn. Die Längsrichtung der Rotationsachse ist dann durch die Tangente am entsprechenden Ort gegeben. Bei einer Führung des zweiten Lagers auf einer Kreisbahn rotiert die Längsachse des Rotors um die Kreisbahn. Das innere und das äußere Ende des Rotors beschreiben folglich jeweils einen Rotationstorus (Ringtorus). In diesem Fall rotiert die Längsrichtung der Rotationsachse in dem Fluid um eine feststehende Achse.

Natürlich sind auch ovale, nicht ebene oder sonstige Kurven möglich. Auch bei solchen Kurven ist die Längsrichtung der Rotationsachse durch die entsprechende Tangente gegeben. Die Rotation der Längsrichtung der Rotationsachse im Raum sollte vorzugsweise stetig sein, so dass sich eine stetig gekrümmte Bahnkurve ergibt. Bei einer unstetig gekrümmten Kurve würde die Translation am Ort des Knicks verschwinden, und die auf den Rotor wirkende Querkraft würde sehr klein. Insbesondere, wenn zwei oder mehr Rotoren in einer Ebene um die Rotationsache rotieren, würde das dazu führen, dass an der Innenseite der Kurve die Rotoren entgegengesetzt angeströmt würden. Entsprechend reduziert sich das durch die Querkraft bewirkte nutzbare Drehmoment.

Wie vorstehend beschrieben, wird durch die Translation des um seine Längsachse drehangetriebenen Rotors in dem Fluid eine Querkraft erzeugt, aus der ein Drehmoment resultiert, das zu einer Rotation des Rotors um eine zweite Achse führt. Diese Rotation kann verschiedenen Zwecken dienen, z.B. dem Antrieb eines Generators. Die derart erzeugte elektrische Energie kann einer Vielzahl von Zwecken dienen, sei es zum Betrieb elektrischer Leuchtmittel, die z.B. an dem Rotor angeordnet sein können. Die elektrische Energie kann als Antriebsenergie sei es für den translatorischen Antrieb und/oder für den Drehantrieb des Rotors rückgespeist werden. Alternativ kann die mechanische Leistung des Rotors als solche genutzt werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine Vorrichtung nach der Erfindung.
Figur 2 zeigt die Vorrichtung nach Figur 1.
Figur 3 zeigt eine Variation der Vorrichtung nach Figur 1 in der Aufsicht.
Figur 4 zeigt eine weitere Vorrichtung nach der Erfindung.

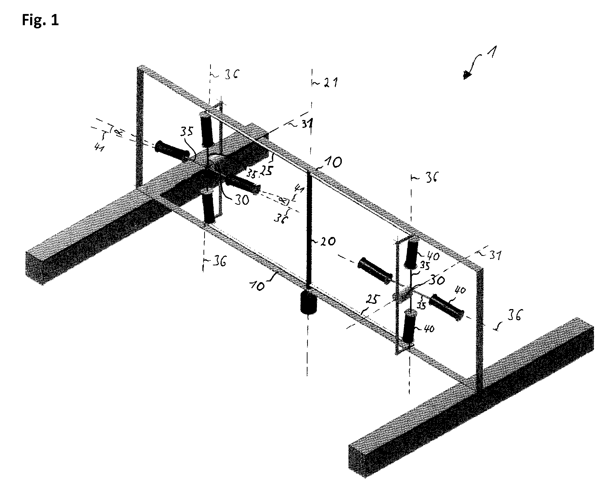

In Figur 1 ist eine erfindungsgemäße Vorrichtung 1 dargestellt. Die Vorrichtung 1 hat einen hier beispielsweise rahmenartigen Träger 10, der eine Antriebswelle 20 drehbar lagert. Die Antriebswelle 20 ist durch einen an dem Träger 10 befestigten Motor 11 drehangetrieben. An der Antriebswelle 20 ist ein Drehgestell 25 befestigt, dass folglich über die Antriebswelle 20 von dem Motor 11 angetrieben wird. An den beiden radial nach außen weisenden Endbereichen des Drehgestells 25 ist je ein sogenanntes zweites Lager 30, das eine Rotation von Stangen 35 in einer bezüglich der Antriebswelle 20 radialen Ebene ermöglicht. An den Stangen 35 sitzt beabstandet von der zweiten Achse 31 je ein Rotor 40. Der Rotor 40 ist rotatiossymmetrisch zu seiner Längsachse 41, die auch als erste Achsen 41 bezeichnet wird. Die Rotoren 40 sind um ihre jeweiligen Längsachsen drehangetrieben und zwar alle mit dem gleichen Drehsinn.

Die Längsachse 41 ist gegenüber der radialen Richtung bezogen auf die zweite Achse 31 (=Rotationsachse) vorzugsweise wie beispielhaft dargestellt um einen kleinen Winkel α (0≤α≤15°) abgewinkelt, liegt jedoch vorzugsweise in einer radialen Ebene bezogen auf die zweite Achse, d.h. in der gleichen Ebene wie die radialen Achsen 36 und vorzugsweise ebenso in einer zu der Antriebswelle 20 radialen Ebene.

Wird nun der Motor 11 in Betrieb genommen, dann treibt dieser die Rotation des Drehgestells 25 an und mit diesem die sich um ihre jeweilige Längsachse drehenden Rotoren 40. Die sich folglich ebenfalls mit der Antriebswelle um die Antriebsachse 21 drehen. Die Rotoren 40 werden folglich in dem die Vorrichtung umgebenden Fluid, z.B. der Luft, angeströmt, weil sie in Längsrichtung der Rotationsachsen 31 verschoben werden, d.h. einerTranslation in dem Fluid unterliegen. Gleichzeitig, d.h. während der Translation der zweiten Lager 30 erfolgt in dem Beispiel auch eine Rotation der Rotationsachsen 31 um eine parallel zur Antriebsachse 21 durch das Lager 30 verlaufende Achse, durch die Zwangsführung des Drehgestells. Die Richtung der Rotationsachsen relativ zum Träger verändert sich folglich.

Die Anströmung der sich um Ihre Längsachse drehenden Rotoren 40 bewirkt eine Querkraft, die als Magnuseffekt bekannt ist. Diese Querkraft wirkt als Drehmoment auf die Stäbe 35 und versetzt diese in eine Rotation um die Rotationsachse 31 (=zweite Achse). Die entsprechende Antriebsleistung lässt sich in nahezu beliebiger Weise nutzen, z.B. kann in dem Lager ein Generator angeordnet sein.

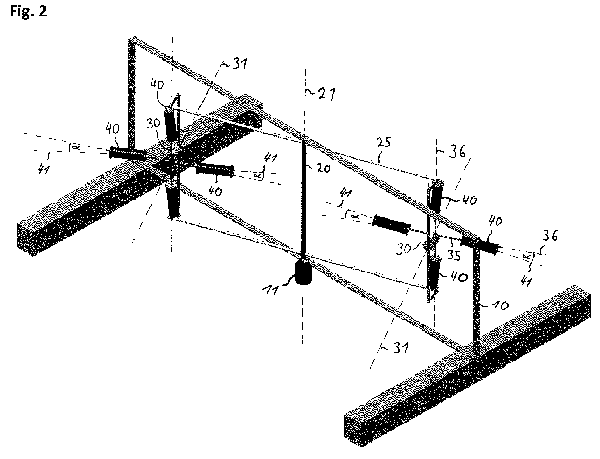

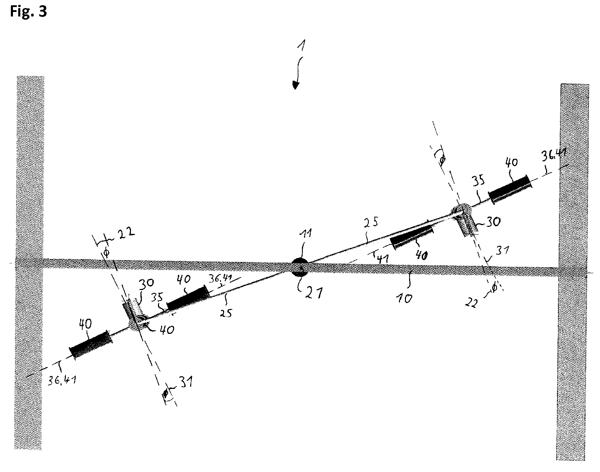

Figuren 2 und 3 zeigen die gleiche Vorrichtung, jedoch ist das Drehgestell um die Antriebsachse etwas rotiert dargestellt. Die Beschreibung der Figur 1 lässt sich folglich auch auf die Figuren 2 und 3 lesen. In Figur 3 ist zudem die Rotationsachse 31 um einen kleinen Winkel *φ* (0≤*φ*≤15°) gegen die Tangentiale 22 der Kreisbahn des Lagers 30 verkippt. Die beiden Achsen 36 und 41 fallen in der Aufsicht aufeinander.

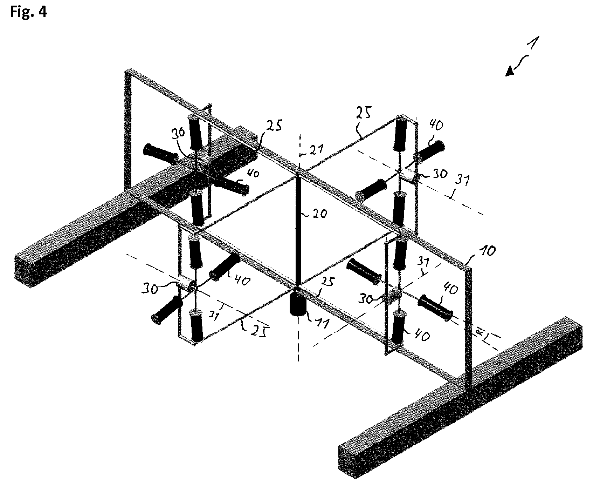

Figur 4 zeigt eine weitere Ausführungsform der Erfindung. Diese Variante hat anstelle eines zweiflügligen Drehgestells 25 in den Figuren 1 bis 3 ein vierflügeliges Drehgestell 25. Im Übrigen lässt sich die Beschreibung der Figur 1 auch auf die Figur 4 lesen. Natürlich sind auch 1 einflüglige Drehgestelle möglich. Auch die Anzahl der Rotoren kann beliebig (mindestens 1 Rotor) variiert werden, wobei die Abstände zwischen den Rotoren ausreichend bemessen sein sollten.

Anders als in den Figuren 1 bis 4 dargestellt können auch mehrere Rotoren 40 an einer Stange 35 befestigt sein, wobei der Begriff Stange hier nur als Synonym für "Träger" verwendet wird, um eine Verwechslung mit dem Träger 10 zu vermeiden. Zudem wurde die Erfindung hier nur anhand einer Kreisbahnführung der zweiten Lager 30 erläutert. Natürlich sind auch andere Bahnkurven möglich. Ein weitere Verbesserung ergibt sich zur eine möglichst strömungsgünstige Profilierung oder Verkleidung des Trägers 25. Insbesondere kann der Träger als vorzugsweise symmetrisches NACA-Profil gestaltet werden.

### Bezugszeichenliste

- 1: Vorrichtung
- 10: Träger
- 11: Motor
- 20: Antriebswelle
- 21: Antriebsachse
- 22: Tangente
- 25: Drehgestell
- 30: zweites Lager / Radiallager
- 31: zweite Achse (=Rotationsachse)
- 40: Rotor
- 41: Längsachse des Rotors / Symmetrieachse des Rotors / erste Achse
- α: Winkel
- *φ*: Winkel

## Patentansprüche

1. Vorrichtung, mit wenigstens einem Rotor,
- mit einer Symmetrieachse, zu der der Rotor rotationssymmetrisch ist,
- der um seine Symmetrieachse motorisch drehangetrieben ist,
- der um eine quer zur Symmetrieachse angeordnete Rotationsachse drehbar gelagert ist, so dass der Rotor bei einer Anströmung mit einem Fluid durch eine Quer zur Fluidströmung wirkende Kraft in eine Drehbewegung um die Rotationsachse drehangetrieben wird und
- der in dem Fluid relativ zu dem Fluid in Längsrichtung der Rotationsachse translatorisch angetrieben ist.

2. Vorrichtung nach Anspruch 1
**dadurch gekennzeichnet, dass**
die Längsrichtung der Rotationsachse in dem Fluid rotiert um wenigstens eine senkrecht zur Rotationsachse im Raum angeordnete dritte Achse rotiert.

3. Vorrichtung nach Anspruch 2
**dadurch gekennzeichnet, dass**
die Längsrichtung der Rotationsachse in dem Fluid um eine feststehende Achse rotiert.
